# EUROPÄISCHE PATENTANMELDUNG

(11) **EP 4 052 832 A1**
(43) Veröffentlichungstag der Anmeldung: **07.09.2022**
(21) Anmeldenummer: 21159921.2
(22) Anmeldetag: 01.03.2021
(51) Int. Cl.: B23K 9/10, B23K 9/32, G08C 17/00, H01R 13/514

(54) **FERNREGLERMODUL UND FERNREGLERMODULPAKET MIT ZUMINDEST ZWEI SOLCHEN FERNREGLERMODULEN**

(71) Anmelder: Fronius International GmbH, 4643 Pettenbach (AT)
(72) Erfinder: NEUBACHER, Günther, 4643 Pettenbach (AT); ADLEFF, Bernhard, 4643 Pettenbach (AT); ORTNER, Roland, 4643 Pettenbach (AT); KLUG, Markus, 4643 Pettenbach (AT)
(74) Vertreter: SONN Patentanwälte OG

(57) **Zusammenfassung**

Die Erfindung betrifft ein Fernreglermodul (1) zum Regeln/Steuern zumindest eines Parameters (Pᵢ) einer Schweißkomponente (SK), mit einem Gehäuse (2) mit zumindest zwei im Wesentlichen gegenüberliegend angeordneten Seitenwänden (3, 4), einem Transceiver (5) zur drahtlosen Kommunikation mit der zu regelnden Schweißkomponente (SK), einer Anzeige (6), zumindest einem Bedienelement (7), einer Steuereinrichtung (8) und einem Energiespeicher (9), sowie ein Fernreglermodulpaket (100) mit zumindest zwei solchen miteinander verbundenen Fernreglermodulen (1). Erfindungsgemäß ist die Steuereinrichtung (8) dazu eingerichtet, jedem Bedienelement (7) einen bestimmten Parameter (Pᵢ) zuzuordnen, und ist an den zumindest zwei im Wesentlichen gegenüberliegenden Seitenwänden (3, 4) des Gehäuses (2) jeweils ein Verbindungselement (10, 11) zweier komplementär gestalteter Verbindungselemente (10, 11) zur lösbaren Verbindung mit dem Gehäuse (2') eines identisch aufgebauten weiteren Fernreglermoduls (1') zur Bildung eines zumindest zwei Fernreglermodule (1, 1') umfassenden Fernreglermodulpakets (100) vorgesehen.

## Beschreibung

Die Erfindung betrifft ein Fernreglermodul zum Regeln/Steuern zumindest eines Parameters einer Schweißkomponente, mit einem Gehäuse mit zumindest zwei im Wesentlichen gegenüberliegend angeordneten Seitenwänden, einem Transceiver zur drahtlosen Kommunikation mit der zu regelnden Schweißkomponente, einer Anzeige, zumindest einem Bedienelement, einer Steuereinrichtung und einem Energiespeicher.

Weiters betrifft die Erfindung ein Fernreglermodulpaket mit zumindest zwei solchen Fernreglermodulen.

Es ist hinlänglich bekannt, Schweißkomponenten, wie zum Beispiel Schweißstromquellen, Drahtvorschubgeräte, Schweißroboter, etc. mit Hilfe von Fernreglern zu Regeln oder zu Steuern. Dabei fallen sowohl Schweißverfahren mit abschmelzbarer Schweißelektrode, insbesondere MIG (Metall-Inertgas)- und MAG (Metall-Aktivgas)-Schweißverfahren und MMA (manual metal arc)-Schweißverfahren, sowie Schweißverfahren mit nichtabschmelzender Schweißelektrode, insbesondere WIG (Wolfram-Inertgas)-Schweißverfahren, aber auch Lichtbogenlötverfahren sowohl in manueller als auch automatisierter Weise darunter. Durch die Verwendung von vorzugsweise drahtlosen Fernreglern kann der Schweißer zumindest eine beschränkte Anzahl von Schweißparametern aus einer Entfernung zur Schweißkomponente bedienen und auch bestimmte Schweißparameter während des Schweißprozesses ändern.

Beispielsweise beschreiben die WO 00/41835 A1 und die WO 2007/137310 A1 Fernreglereinheiten für Schweißkomponenten, welche eine einfache und exakte Ferneinstellung eines Schweißparameters ermöglichen. Dabei ermöglichen die Fernreglereinheiten die Regelung oder Steuerung von nur einer sehr beschränkten Anzahl an Schweißparametern, wodurch die Einsatzmöglichkeit und die Flexibilität stark eingeschränkt wird.

Andere Fernregler, wie zum Beispiel gemäß der WO 2008/060753 A1 weisen mehr Auswahlmöglichkeiten und Bedienelemente auf. Dadurch weisen die Fernregler jedoch eine größere Bauform auf, wodurch sie schwer handhabbar sind.

Die Aufgabe der vorliegenden Erfindung besteht in der Schaffung eines oben genannten Fernreglermoduls und eines aus mehreren Fernreglermodulen aufgebauten Fernreglermodulpakets, durch welche eine einfache und flexible Regelung oder Steuerung zumindest eines Parameters einer Schweißkomponente in flexibler Weise ermöglicht wird. Nachteile bekannter Fernregler sollen vermieden oder zumindest reduziert werden.

Gelöst wird die erfindungsgemäße Aufgabe durch ein oben genanntes Fernreglermodul, bei dem die Steuereinrichtung dazu eingerichtet ist, jedem Bedienelement einen bestimmten Parameter zuzuordnen, und dass an den zumindest zwei im Wesentlichen gegenüberliegenden Seitenwänden des Gehäuses jeweils ein Verbindungselement zweier komplementär gestalteter Verbindungselemente zur lösbaren Verbindung mit dem Gehäuse eines identisch aufgebauten weiteren Fernreglermoduls zur Bildung eines zumindest zwei Fernreglermodule umfassenden Fernreglermodulpakets vorgesehen ist. Erfindungsgemäß ist das Fernreglermodul besonders einfach mit zumindest einem Bedienelement aufgebaut, wobei diesem zumindest einem Bedienelement individuell ein bestimmter Parameter der Schweißkomponente zugeordnet werden kann, der in der Folge geregelt oder gesteuert werden kann. Über die zumindest eine Anzeige kann die Zuordnung eines bestimmten Parameters zu dem zumindest einen Bedienelement erfolgen und der jeweilige mit dem Bedienelement geregelte oder gesteuerte Parameter dargestellt werden. Um das Fernreglermodul beliebig erweitern zu können, kann es mit einem identisch aufgebauten Fernreglermodul verbunden und zu einem Fernreglermodulpaket zusammengesetzt werden. Die Verbindung zwischen den Fernreglermodulen wird vorzugsweise werkzeuglos hergestellt und wieder gelöst. Dadurch resultiert eine individuell programmierbare und individuell erweiterbare Fernregelmöglichkeit, welche einfach und rasch an die jeweiligen Gegebenheiten und jeweiligen Bedürfnisse des Schweißers angepasst werden kann. Das einzelne Fernreglermodul mit seinen wesentlichen Komponenten, nämlich dem Gehäuse, dem Transceiver zur drahtlosen Kommunikation mit der zu regelnden Schweißkomponente, der Anzeige, dem zumindest einen Bedienelement, einer Steuereinrichtung und einem Energiespeicher ist relativ einfach, kostengünstig und in kleiner Baugröße herstellbar. Durch die Erweiterbarkeit mit weiteren, identisch aufgebauten Fernreglermodulen kann bei Bedarf auch eine Vielzahl an Parametern der Schweißkomponenten geregelt oder gesteuert werden und auch ein komplexerer Schweißprozess optimal aus der Ferne bedient werden.

Gemäß einem Merkmal der Erfindung ist ein Verbindungselement an einer Seitenwand des Gehäuses des Fernreglermoduls durch eine Nut und das komplementär gestaltete Verbindungselement an der gegenüberliegenden Seitenwand des Gehäuses des Fernreglermoduls durch eine Feder gebildet. Durch eine derartige Nut-Feder-Verbindung können zumindest zwei identisch aufgebaute Fernreglermodule besonders einfach und rasch verbunden werden. Derartige Verbindungselemente können besonders einfach und kostengünstig hergestellt werden, insbesondere bei der Herstellung des Gehäuses, beispielsweise im Spritzgussverfahren, besonders leicht integriert werden. Eine Nut-Feder-Verbindung beinhaltet insbesondere eine Verbindung einer T-förmigen Feder mit einer komplementär gestalteten T-förmigen Nut, oder auch eine Schwalbenschwanzverbindung. Um ein Feedback einer ordnungsgemäßen Verbindung zwischen zwei Fernreglernmodulen zu erhalten, kann die Verbindung in der Endposition spürbar einrasten.

Alternativ zu einer oben genannten mechanischen Verbindung, kann ein Verbindungselement auch durch ein Magnetelement und das komplementär gestaltete Verbindungselement durch ein komplementär gepoltes Magnetelement oder Metallelement aus magnetischem Material gebildet sein. Dadurch kann eine magnetische Verbindung identisch aufgebauter Fernreglermodule erzielt werden. Durch entsprechende Anordnung verschieden gepolter Magnetelemente kann eine Verbindung zweier Fernreglermodule nur in einer vorgesehenen Orientierung gesichert werden. Magnetelemente haben jedoch den Nachteil, dass magnetisierbarer Schmutz, der beim Schweißen auftreten kann, angezogen wird und dadurch die Gehäuse der Fernreglermodule verschmutzt werden.

Wenn das Verbindungselement an einer Seitenwand des Gehäuses des Fernreglermoduls und das komplementär gestaltete Verbindungselement an der gegenüberliegenden Seitenwand des Fernreglermoduls asymmetrisch ausgebildet ist, kann die Verbindung der Verbindungselemente nur in einer gewünschten Richtung und Orientierung ermöglicht werden. Durch eine derartige Konstruktion werden nach dem sogenannten Poka Yoke-Prinzip falsche Verbindungen zweier Fernreglermodule, beispielsweise in einer falschen Orientierung der beiden Gehäuse zueinander, vermieden. Die asymmetrische Ausbildung beispielsweise einer Nut-Feder-Verbindung stellt somit die richtige Orientierung der Gehäuse der miteinander verbundenen Fernreglermodule zueinander sicher.

Wenn das Verbindungselement und das komplementär gestaltete Verbindungselement elektrische Kontakte aufweist, kann eine elektrische Verbindung zwischen den miteinander verbundenen Fernreglermodulen erzielt werden. Diese elektrische Verbindung kann beispielsweise nur zur Erkennung einer ordnungsgemäßen Verbindung zwischen den Fernreglermodulen oder auch zur Möglichkeit einer Kommunikation zwischen den miteinander verbundenen Fernreglermodulen dienen.

Vorzugsweise ist zumindest ein Bedienelement durch einen Dreh-/Drückregler gebildet. Durch ein derartiges kombiniertes Bedienelement kann eine Auswahl und eine Veränderung eines Parameters durch Drehen erfolgen und falls erforderlich eine Bestätigung des ausgewählten Parameters oder Parameterwerts durch Drücken oder Kippen des Bedienelements erzielt werden. Ein solcher Dreh-/Drückregler ist unter der Voraussetzung einer geeigneten Größe und Oberflächenbeschaffenheit auch mit Schweißhandschuhen leicht bedienbar.

Wenn weitere durch Tasten gebildete Bedienelemente am Fernreglermodul vorgesehen sind, können bestimmte Funktionen besonders rasch und einfach ausgelöst werden. Mit derartigen Tasten bzw. Softkeys kann beispielsweise eine Initialisierung gestartet oder ein Programm zur Zuordnung zwischen den Bedienelementen und den bestimmten Parametern der Schweißkomponenten aufgerufen werden.

Die zumindest eine Anzeige des Fernreglermoduls kann beispielsweise durch einen Bildschirm gebildet sein. Auf diesem Bildschirm können auszuwählende Parameter sowie Werte der Parameter in geeigneter Weise angezeigt werden. Auch einfachere Anzeigen in Form von Leuchtdioden, Leuchtdiodenarrays oder dgl. sind denkbar.

Wenn die zumindest eine Anzeige durch einen Touchscreen gebildet ist, kann eine Kombination zwischen Anzeige und Bedienelement geschaffen werden. Für die Bedienung mit Schweißhandschuhen eignen sich jedoch die oben erwähnten Dreh-/Drückregler mehr.

Um die Anzeige vor Verschmutzung und Beschädigung zu schützen, kann eine vorzugsweise transparente Schutzabdeckung über der Anzeige angeordnet sein. Diese Schutzabdeckung vorzugsweise aus Kunststoff, kann beispielsweise schwenkbar über der Anzeige angeordnet sein und bei Bedarf vor die Anzeige geschwenkt werden.

Der Transceiver zur drahtlosen Kommunikation mit der jeweiligen Schweißkomponente kann durch einen Hochfrequenz-Transceiver, insbesondere Bluetooth^{®}-Transceiver, WLAN-Transceiver oder dgl. gebildet sein. Fernsteuerungen mittels geeigneter Hochfrequenzen erlauben die Überbrückung größerer Reichweiten mit relativ geringem Aufwand. Auch sind solche gängige Hochfrequenz-Transceiver sehr kostengünstig erhältlich. Denkbar sind auch optische Datenübertragungen, wobei hier allerdings keine Hindernisse zwischen dem Fernreglermodul und der jeweiligen Schweißkomponente auftreten sollten.

Wenn mit der Steuereinrichtung zumindest ein Sensor oder zumindest ein Anschluss für einen Sensor verbunden ist, können mit dem Fernreglermodul weitere interessante Funktionen realisiert werden. Die Sensoren können im Gehäuse des Fernreglermoduls als sogenannte interne Sensoren integriert sein. Aber auch externe Sensoren an geeigneten Stellen können mit entsprechenden Anschlüssen am Fernreglermodul verbunden sein. Beispielsweise können derartige Anschlüsse als Steck-Verbindung, als Klick-Verbindung oder auch als Bajonett-Verbindung ausgeführt sein. Dabei kann die Verbindung sowohl über zumindest eine Leitung oder auch drahtlos realisiert werden.

Als Sensoren können beispielsweise optische Sensoren oder eine Kamera zum Einsatz kommen, welche die Schweißstelle abtasten, um beispielsweise die Länge der Schweißnaht zu erfassen. Auch Gyrosensoren bzw. Gyrometer, welche eine Drehbewegung erfassen oder Beschleunigungssensoren können für verschiedene Zwecke verwendet werden. Ultraschallsensoren können für die Erkennung von Rissen und Poren in der Schweißnaht eingesetzt werden. Weitere Beispiele für Sensoren sind Temperatursensoren, Infrarotsensoren, akustische Sensoren (beispielsweise ein Mikrofon, welches auch in Kombination mit einer Sprachsteuerung verwendet werden kann), Luftgütesensoren, etc.

Wenn mit der Steuereinrichtung des Fernreglermoduls ein Lautsprecher verbunden ist, können bestimmte akustische Signale abgegeben werden. Beispielsweise kann der Schweißer durch ein akustisches Signal über Probleme während des Schweißprozesses informiert werden oder eine niedrige Batterieladung des Fernreglermoduls angezeigt werden.

Wenn eine Schnittstelle zum Laden des Energiespeichers des Fernreglermoduls vorgesehen ist, kann eine einfache und rasche Aufladung des Energiespeichers ermöglicht werden. Die Schnittstelle kann sowohl leitungsgebunden ausgebildet sein, beispielsweise durch eine USB (Universal Serial Bus)-Schnittstelle realisiert sein oder auch drahtlos, um beispielsweise eine induktive Ladung des Energiespeichers zu ermöglichen.

Am Fernreglermodul kann ein Befestigungselement vorgesehen sein, um eine Verbindung an verschiedenen Komponenten, beispielsweise an einem Schweißhelm, einem Schweißhandschuh, an der Schweißkleidung, am Schweißbrenner, am Elektrodenhalter, am Schweißtisch, am Montagetisch, an einer Schweißzelle oder am Werkstück, zu ermöglichen. Dementsprechend kann das Befestigungselement verschiedenartig ausgebildet sein, wie zum Beispiel als Schelle, Klemme oder als Steck-Verbindung, als Klick-Verbindung oder Bajonett-Verbindung, welche vorzugsweise werkzeuglos betätigbar ist, als Klettverschluss, als Adapterplatte, welche an der entsprechenden Komponente aufgeklebt wird, oder als Magnet zur Befestigung an magnetisierbaren Teilen.

Das Befestigungselement kann auch durch ein mit einem Verbindungselement verbindbares Element mit einer Klebeverbindung oder einer Magnetverbindung gebildet sein. Somit wird das Element an der gewünschten Schweißkomponente aufgeklebt oder mit Hilfe eines Magnets befestigt und das Fernreglermodul über ein ohnedies vorhandenes Verbindungselement mit diesem Element verbunden und somit an der entsprechenden Schweißkomponente befestigt.

Vorzugsweise ist mit der Steuereinrichtung ein Speicher verbunden, um verschiedene Daten abspeichern oder abrufen zu können.

Gelöst wird die erfindungsgemäße Aufgabe auch durch ein oben genanntes Fernreglermodulpaket, welches zumindest zwei oben beschriebene miteinander verbundene Fernreglermodule beinhaltet. Wie bereits oben beschrieben, lassen sich die Fernreglermodule miteinander verbinden und somit beliebig erweitern, sodass eine Vielzahl an Parametern von Schweißkomponenten mit den verschiedenen Bedienelementen der einzelnen Fernreglermodule von der Ferne aus geregelt oder gesteuert werden können.

Gemäß einem weiteren Merkmal der Erfindung ist eine Schale zur Aufnahme der zumindest zwei miteinander verbundenen Fernreglermodule vorgesehen. Durch eine solche Schale, welche vorzugsweise eine der Anzahl der aufzunehmenden Fernreglermodule angepasste Ausnehmung aufweist, können die miteinander verbundenen Fernreglermodule einerseits geschützt und andererseits deren Handhabung erleichtert werden. Die Schale kann aus einem elastischen Material gebildet sein, welche die Fernreglermodule auch beim Herabfallen vor Beschädigung schützen. Weiters kann an der Schale ein geeignetes Befestigungselement, beispielsweise ein Umhängegurt, montiert sein, mit dem die Schale zusammen mit den darin angeordneten Fernreglermodulen während des Schweißprozesses und während der Bedienung um den Hals getragen werden kann.

Wenn ein Batteriemodul vorgesehen ist, welches über ein Verbindungselement mit einem Fernreglermodul verbindbar ist, kann eine zusätzliche Energieversorgung des Fernreglermodulpakets geschaffen werden. Dadurch kann die Betriebsdauer der einzelnen Fernreglermodule erhöht werden. Es ist auch denkbar, dass mehrere externe Batteriemodule parallel geschaltet und mit den Fernreglermodulen verbunden werden.

Vorteilhafterweise ist ein Fernreglermodul des Fernreglermodulpakets als Primär-Fernreglermodul und die weiteren Fernreglermodule als Sekundär-Fernreglermodule definierbar, und vorzugsweise ausschließlich der Transceiver dieses Primär-Fernreglermoduls zur drahtlosen Kommunikation mit der zu regelnden Schweißkomponente ausgebildet. Die übrigen Fernreglermodule sind als Sekundär-Fernreglermodule definiert und dem Primär-Fernreglermodul quasi untergeordnet und leiten ihre Daten an das Primär-Fernreglermodul zur Übertragung an die entsprechenden Schweißkomponenten, wie beispielsweise der Stromquelle, dem Drahtvorschub, dem Schweißbrenner, einem Kühlkreis, einem Absaugsystem, einer Schutzgasversorgung, einem Schweißroboter und/oder einem Assistenzsystem weiter. Ferner kann eine Übertragung vom Primär-Fernreglermodul zu externen Systemen, wie beispielsweise einer Hallensteuerung, einer zentralen Medien- und Gasversorgung, einer zentralen Lüftung, einer externen speicherprogrammierbaren Steuerung (SPS), einer Produktionslinie und/oder einer Fertigungsstraße erfolgen.

Die vorliegende Erfindung wird anhand der beigefügten Zeichnungen näher erläutert. Darin zeigen
- Fig. 1: eine schematische Darstellung einer Schweißvorrichtung mit verschiedenen Schweißkomponenten und einem Fernregler zum Regeln/Steuern zumindest eines Parameters einer Schweißkomponente nach dem Stand der Technik;
- Fig. 2: eine Blockschaltbild einer Ausführungsform eines erfindungsgemäßen Fernreglermoduls;
- Fig. 3: ein Flussdiagramm eines Prozesses zur Zuordnung eines bestimmten Parameters zu einem Bedienelement des Fernreglermoduls;
- Fig. 4: eine schematische Ansicht auf das Gehäuse eines Fernreglermoduls mit einer Variante der Verbindungelemente in Form einer T-förmigen Nut und einer T-förmigen Feder;
- Fig. 5: die Verbindung zweier identisch aufgebauter Fernreglermodule mit einem Batteriemodul gemäß Fig. 4; und
- Fig. 6: eine schematische Ansicht verschiedener zu Fernreglermodulpaketen verbundener Fernreglermodule.

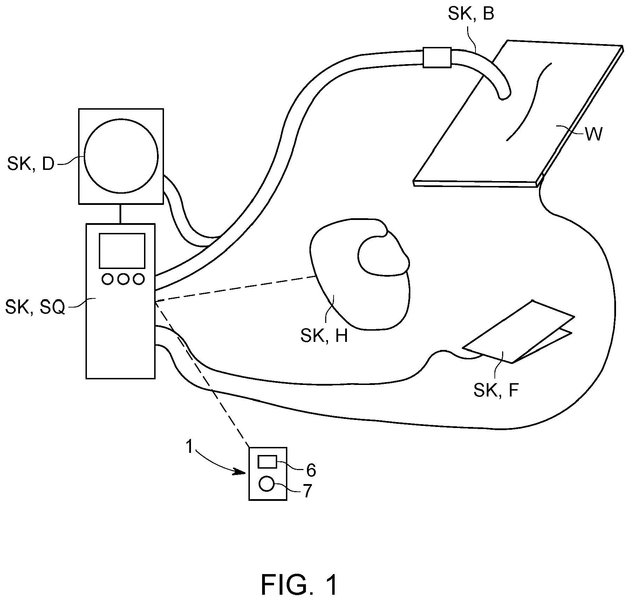

Fig. 1 zeigt eine schematische Darstellung einer Schweißvorrichtung mit verschiedenen Schweißkomponenten SK, wie zum Beispiel einer Stromquelle SQ, einem Schweißbrenner B, einer Drahtvorschubeinrichtung D, einem Schweißhelm H oder einem Fußschalter F. Für die Durchführung eines Schweißprozesses mit Hilfe des Schweißbrenners B an einem Werkstück W werden bestimmte Parameter Pᵢ an den verschiedenen Schweißkomponenten SK eingestellt und allenfalls während des Schweißprozesses geändert. Die Einstellung und Änderung der Parameter Pᵢ kann vor dem Schweißprozess an den Schweißkomponenten SK, insbesondere der Schweißstromquelle SQ vorgenommen werden oder auch während des Schweißprozesses, beispielsweise mit entsprechenden Bedienelementen (nicht dargestellt) direkt am Schweißbrenner B. Um eine einfachere Änderung von Parametern Pᵢ auch während des Schweißprozesses zu ermöglichen, kann ein Fernreglermodul 1 vorgesehen sein, welches drahtlos mit den Schweißkomponenten SK kommuniziert und zumindest einige Parameter Pᵢ der Schweißkomponenten SK regeln/steuern kann. Zu diesem Zweck ist zumindest ein Bedienelement 7 am Fernreglermodul 1 angeordnet. Vorzugsweise weist das Fernreglermodul 1 auch eine Anzeige 6 zur Darstellung des zu regelnden/steuernden Parameters Pᵢ oder des jeweiligen Werts des Parameters Pᵢ auf.

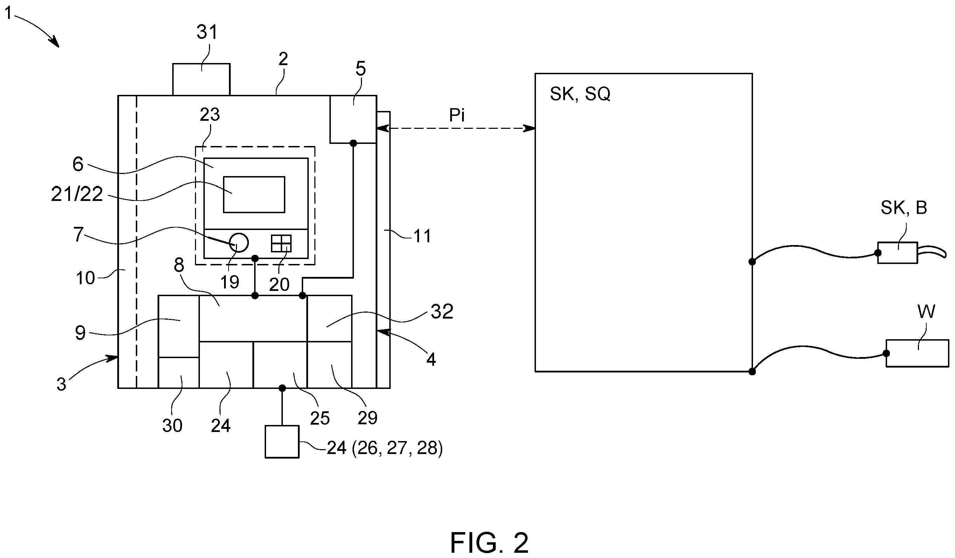

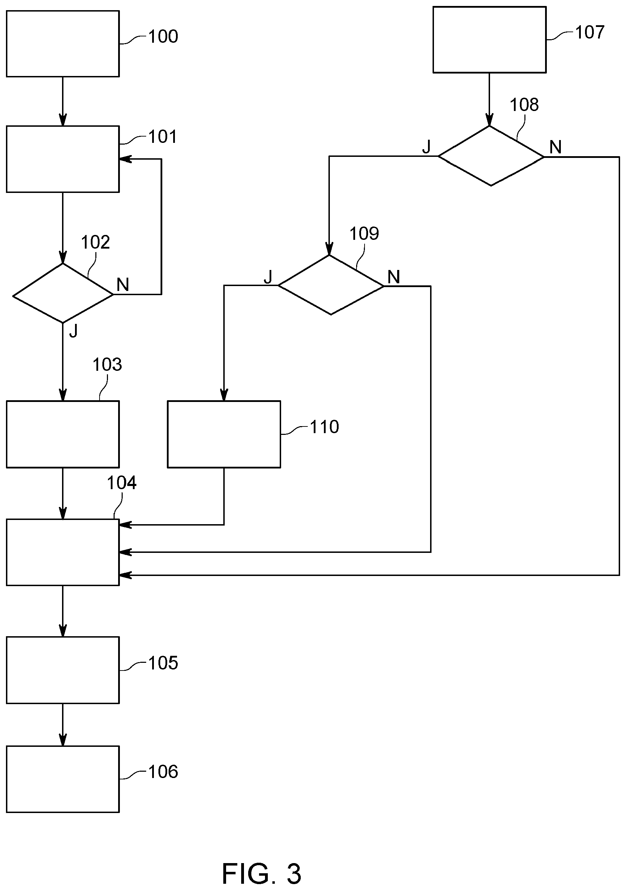

In Fig. 2 ist ein Blockschaltbild einer Ausführungsform eines erfindungsgemäßen Fernreglermoduls 1 dargestellt. Das Fernreglermodul 1 dient zum Regeln/Steuern zumindest eines Parameters Pᵢ einer Schweißkomponente SK. Das Fernreglermodul 1 weist ein Gehäuse 2 mit zumindest zwei im Wesentlichen gegenüberliegend angeordneten Seitenwänden 3, 4 auf. Im Inneren des Gehäuses 2 befindet sich zumindest ein Transceiver 5 zur drahtlosen Kommunikation mit der zu regelnden Schweißkomponente SK, eine Anzeige 6, zumindest ein Bedienelement 7, eine Steuereinrichtung 8 und ein Energiespeicher 9. Erfindungsgemäß ist die Steuereinrichtung 8 dazu eingerichtet, jedem Bedienelement 7 einen bestimmten Parameter Pᵢ zuzuordnen (siehe Fig. 3).

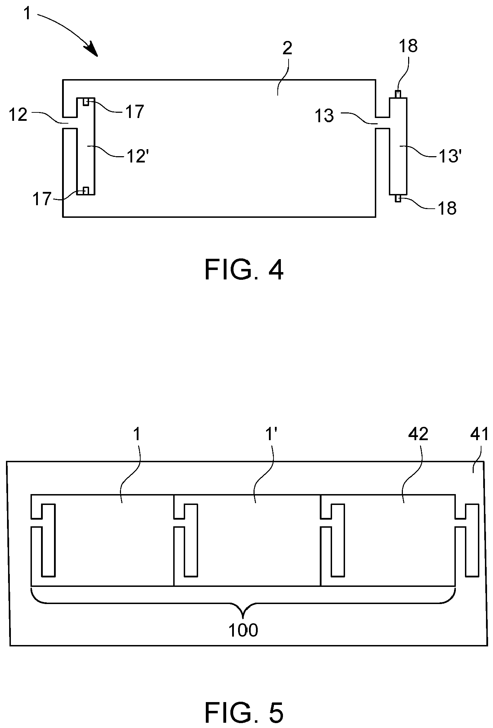

Weiters ist an den zwei im Wesentlichen gegenüberliegenden Seitenwänden 3, 4 des Gehäuses 2 jeweils ein Verbindungselement 10, 11 zweier komplementär gestalteter Verbindungselemente 10, 11 angeordnet. Über diese Verbindungselemente 10, 11 kann eine lösbare Verbindung mit dem Gehäuse 2' eines identisch aufgebauten weiteren Fernreglermoduls 1' zur Bildung eines zumindest zwei Fernreglermodule 1, 1' umfassenden Fernreglermodulpakets 100 hergestellt werden (siehe Fig. 4 und 5).

Die Anzeige kann einen Bildschirm 21 oder einen Touchscreen 22 umfassen. Die Bedienungselemente 7 sind vorzugsweise durch einen Dreh-/Drückregler 19 und Tasten 20 gebildet. Über der Anzeige 6 und allenfalls auch den Bedienelementen 7 kann eine vorzugsweise transparente Schutzabdeckung 23 angeordnet sein.

Der Energiespeicher 9 des Fernreglermoduls 1 kann über einen Ladestecker 30, beispielsweise einen USB-Stecker, verbunden sein, um ein Aufladen des Energiespeichers 9 zu ermöglichen.

Vorzugsweise ist mit der Steuereinrichtung 8 zumindest ein Sensor 24 oder zumindest ein Anschluss 25 für einen Sensor 24 verbunden. Dadurch können weitere Funktionen realisiert werden. Als Sensor 24 kommen beispielsweise optische Sensoren 26, Gyrosensoren 27, Luftgütesensoren 28, Temperatursensoren, Mikrofone, Ultraschallsensoren, etc. (nicht dargestellt) in Frage. Mit der Steuereinrichtung 8 können ein Lautsprecher 29 und ein Speicher 32 verbunden sein. Ferner kann ein Speicher 32 mit der Stromquelle SQ, einem Netzwerk, oder einem Cloud-Speicher direkt oder indirekt verbunden sein und es können Daten zwischen dem Speicher 32 und der Stromquelle SQ, dem Netzwerk oder dem Cloud-Speicher bidirektional synchronisiert bzw. ausgetauscht werden.

Vorzugsweise ist am Gehäuse 2 des Fernreglermoduls 1 ein Befestigungselement 31 vorgesehen, über welches das Fernreglermodul 1 beispielsweise an einer Schweißkomponente SK oder dem Werkstück W befestigt werden kann. Das Befestigungselement 31 kann durch mechanische Schellen, Klemmen, Bänder oder dgl. aber auch Magnete, Klettverschlüsse, etc. gebildet sein, welche eine einfache und rasche Befestigung des Fernreglermoduls 1 an der gewünschten Einrichtung ermöglicht.

Fig. 3 zeigt ein Flussdiagramm eines Prozesses zur Zuordnung eines bestimmten Parameters Pᵢ zu einem Bedienelement 7 des Fernreglermoduls 1. Nach dem erstmaligen Einschalten des Fernreglermoduls 1 (Block 100) erfolgt eine Zuordnung und Verbindung zu einer bestimmten Schweißkomponente SK bzw. das sogenannte Pairing (Block 101). Gemäß der Abfrage 102 wird überprüft, ob die Zuordnung bzw. das Pairing erfolgreich war. Wenn noch keine Verbindung mit der gewünschten Schweißkomponente SK hergestellt werden konnte, wird wieder zu Block 101 gesprungen. Ist die Verbindung mit der Schweißkomponente SK erfolgreich, folgt die Auswahl des gewünschten Parameters Pᵢ, der mit dem zumindest einen Bedienelement 7 des Fernreglermoduls 1 geregelt/gesteuert werden soll (Block 103). Diese Auswahl kann beispielsweise durch Anzeige aller möglichen Parameter Pᵢ an der Anzeige 6 des Fernreglermoduls 1 erfolgen. Nach der Zuordnung zwischen Bedienelement 7 und Parameter Pi wird gemäß Block 104 auf die Änderung des Werts für den zugeordneten Parameter Pᵢ gewartet. Beispielsweise erfolgt die Änderung durch Drehen des Dreh-/Drückreglers 21 als Bedienelement 7 und die Bestätigung des gewünschten Werts für den zugeordneten Parameter Pi durch Drücken des Dreh-/Drückreglers 21. Im Anschluss folgt die Änderung des Parameters Pi an der entsprechenden Schweißkomponente SK (Block 105), wozu entsprechende Informationen drahtlos an die Schweißkomponente SK übertragen werden. Schließlich folgt gemäß Block 106 eine Rückmeldung des geänderten Parameters Pi der Schweißkomponente SK und vorzugsweise eine Darstellung des Werts des Parameters Pi an der Anzeige 6 des Fernreglermoduls 1.

Optional kann eine Kopplung des Fernreglermoduls 1 mit einem zweiten Fernreglermodul 1' hergestellt werden (Block 107). Wenn gemäß Abfrage bzw. internem Vergleich (Block 108) die Schweißkomponente SK identisch mit der bereits verbundenen Schweißkomponente SK ist, wird zu Abfrage 109 gesprungen, wo abgefragt wird, ob der Parameter Pᵢ identisch mit dem bereits zugeordneten Parameter Pᵢ ist. Wenn die beiden Fernreglermodule 1, 1' denselben Parameter Pi auf derselben Schweißkomponente SK steuern, so bekommt das Fernreglermodul 1' einen neuen Default-Parameter gesetzt (Block 110), der nicht dem zugeordneten Parameter Pi entspricht. Danach wird auf eine Eingabe durch das Bedienelement 7, insbesondere den Dreh-/Drückregler 21, gewartet (Block 104). Wenn die Abfragen (Böcke 108, 109) mit nein zu beantworten sind, folgt ebenfalls ein Sprung zu Block 104 und es wird auf die Auswahl und Bestätigung eines Werts für den zugeordneten Parameter Pᵢ gewartet.

Fig. 4 zeigt eine schematische Ansicht auf das Gehäuse 2 eines Fernreglermoduls 1 mit einer Variante der Verbindungselemente 10, 11 in Form einer Nut 12, insbesondere einer T-förmigen Nut 12' und einer Feder 13, insbesondere einer T-förmigen Feder 13'. Durch entsprechende asymmetrische Anordnung der Verbindungselemente 10, 11 kann erreicht werden, dass eine Verbindung zweier Fernreglermodule 1, 1' nur in einer bevorzugten Richtung möglich ist (siehe Fig. 5). An den Verbindungselementen 10, 11 können elektrische Kontakte 17, 18 angeordnet sein, über welche eine Kommunikation zwischen den Fernreglermodulen 1, 1' oder ein gegenseitiges Laden der Energiespeicher 9 der jeweiligen Fernreglermodule 1, 1' ermöglicht wird.

In Fig. 5 ist die Verbindung zweier identisch aufgebauter Fernreglermodule 1, 1' und eines Batteriemoduls 42 zu einem Fernreglermodulpaket 100 gezeigt. Das Fernreglermodulpaket 100 kann in einer Schale 41 angeordnet werden.

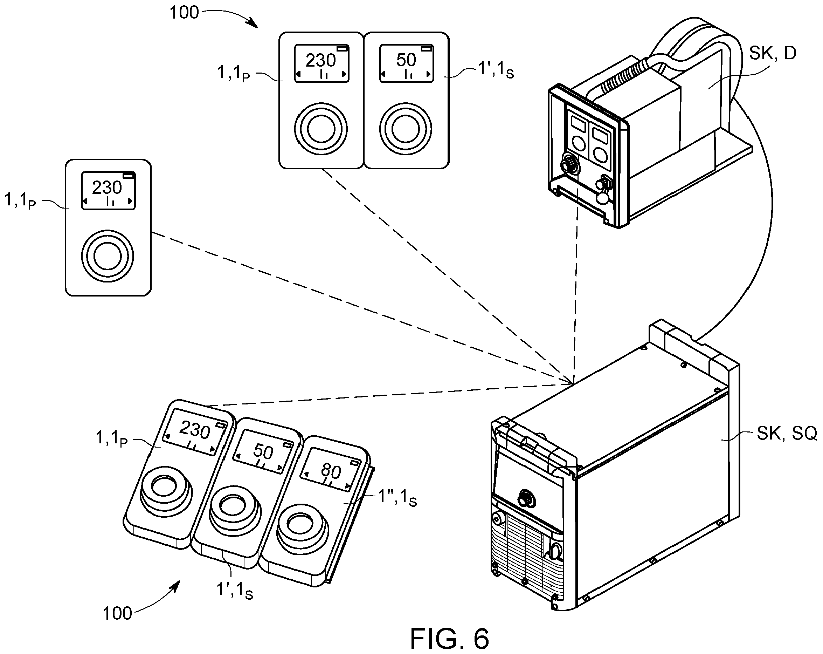

Fig. 6 zeigt eine schematische Ansicht verschiedener zu Fernreglermodulpaketen 100 verbundener Fernreglermodule 1, 1', 1'' und deren Kommunikation mit den Schweißkomponenten SK, beispielsweise einer Schweißstromquelle SQ und einem Drahtvorschub D. Die drahtlose Kommunikation zwischen den Fernreglermodulpaketen 100 und den Schweißkomponenten SK kann über Hochfrequenz, insbesondere Bluetooth^{®} oder dgl. erfolgen. Bei einem Fernreglermodulpaket 100 kann ein Fernreglermodul 1 als Primär-Fernreglermodul 1_{P} definiert werden, über den die Kommunikation mit den Schweißkomponenten SK erfolgt. Die übrigen Fernreglermodule 1', 1'' werden als Sekundär-Fernreglermodule 1_{S} definiert.

## Patentansprüche

1. Fernreglermodul (1) zum Regeln/Steuern zumindest eines Parameters (Pᵢ) einer Schweißkomponente (SK), mit einem Gehäuse (2) mit zumindest zwei im Wesentlichen gegenüberliegend angeordneten Seitenwänden (3, 4), einem Transceiver (5) zur drahtlosen Kommunikation mit der zu regelnden Schweißkomponente (SK), einer Anzeige (6), zumindest einem Bedienelement (7), einer Steuereinrichtung (8) und einem Energiespeicher (9), **dadurch gekennzeichnet, dass** die Steuereinrichtung (8) dazu eingerichtet ist, jedem Bedienelement (7) einen bestimmten Parameter (Pᵢ) zuzuordnen, und dass an den zumindest zwei im Wesentlichen gegenüberliegenden Seitenwänden (3, 4) des Gehäuses (2) jeweils ein Verbindungselement (10, 11) zweier komplementär gestalteter Verbindungselemente (10, 11) zur lösbaren Verbindung mit dem Gehäuse (2') eines identisch aufgebauten weiteren Fernreglermoduls (1') zur Bildung eines zumindest zwei Fernreglermodule (1, 1') umfassenden Fernreglermodulpakets (100) vorgesehen ist.

2. Fernreglermodul (1) nach Anspruch 1, **dadurch gekennzeichnet, dass** ein Verbindungselement (10) durch eine Nut (12), vorzugsweise eine T-Nut (12'), und das komplementär gestaltete Verbindungselement (11) durch eine Feder (13), vorzugsweise eine T-förmige Feder (13') gebildet ist.

3. Fernreglermodul (1) nach Anspruch 1, **dadurch gekennzeichnet, dass** ein Verbindungselement (10) durch ein Magnetelement (14) und das komplementär gestaltete Verbindungselement (11) durch ein komplementär gepoltes Magnetelement (15) oder einem Metallelement (16) aus magnetischem Material gebildet ist.

4. Fernreglermodul (1) nach einem der Ansprüche 1 bis 3, **dadurch gekennzeichnet, dass** das Verbindungselement (10) und das komplementär gestaltete Verbindungselement (11) asymmetrisch ausgebildet ist, sodass die Verbindung der Verbindungselemente (10, 11) nur in einer Richtung und Orientierung zulässig ist.

5. Fernreglermodul (1) nach einem der Ansprüche 1 bis 4, **dadurch gekennzeichnet, dass** das Verbindungselement (10) und das komplementär gestaltete Verbindungselement (11) elektrische Kontakte (17, 18) aufweist.

6. Fernreglermodul (1) nach einem der Ansprüche 1 bis 5, **dadurch gekennzeichnet, dass** zumindest ein Bedienelement (7) durch einen Dreh-/Drückregler (19) und bzw. oder durch Tasten (20) gebildet ist.

7. Fernreglermodul (1) nach einem der Ansprüche 1 bis 6, **dadurch gekennzeichnet, dass** mit der Steuereinrichtung (8) zumindest ein Sensor (24) oder zumindest ein Anschluss (25) für einen Sensor (24) verbunden ist.

8. Fernreglermodul (1) nach Anspruch 7, **dadurch gekennzeichnet, dass** als Sensor (24) ein optischer Sensor (26), eine Kamera, ein Gyrosensor (27), ein Luftgütesensor (28), ein Temperatursensor, ein Mikrofon, und bzw. oder ein Ultraschallsensor vorgesehen ist.

9. Fernreglermodul (1) nach einem der Ansprüche 1 bis 8, **dadurch gekennzeichnet, dass** eine Schnittstelle (30) zum Laden des Energiespeichers (9) vorgesehen ist.

10. Fernreglermodul (1) nach einem der Ansprüche 1 bis 9, **dadurch gekennzeichnet, dass** ein Befestigungselement (31) vorgesehen ist.

11. Fernreglermodul (1) nach einem der Ansprüche 1 bis 10, **dadurch gekennzeichnet, dass** mit der Steuereinrichtung (8) ein Speicher (32) verbunden ist.

12. Fernreglermodulpaket (100) mit zumindest zwei miteinander verbundenen Fernreglermodulen (1) nach einem der Ansprüche 1 bis 11.

13. Fernreglermodulpaket (100) nach Anspruch 12, **dadurch gekennzeichnet, dass** eine Schale (41) zur Aufnahme der zumindest zwei miteinander verbundenen Fernreglermodule (1) vorgesehen ist.

14. Fernreglermodulpaket (100) nach Anspruch 12 oder 13, **dadurch gekennzeichnet, dass** ein Batteriemodul (42) vorgesehen ist, welches über ein Verbindungselement (10, 11) mit einem Fernreglermodul (1) verbindbar ist.

15. Fernreglermodulpaket (100) nach einem der Ansprüche 12 bis 14, **dadurch gekennzeichnet, dass** ein Fernreglermodul (1) als Primär-Fernreglermodul (1_{P}) und die weiteren Fernreglermodule (1) als Sekundär-Fernreglermodule (1_{S}) definierbar sind, und dass vorzugsweise ausschließlich der Transceiver (5) des Primär-Fernreglermoduls (1_{P}) zur drahtlosen Kommunikation mit der zu regelnden Schweißkomponente (SK) ausgebildet ist.
